# EUROPÄISCHE PATENTSCHRIFT

(11) **EP 2 684 299 B1**
(45) Veröffentlichungstag und Bekanntmachung des Hinweises auf die Patenterteilung: **06.06.2018**
(21) Anmeldenummer: 12707778.2
(22) Anmeldetag: 09.03.2012
(51) Int. Cl.: H04B 7/185, G08G 5/04

(54) **SATELLITEN-KOMMUNIKATIONSNETZWERK**
SATELLITE COMMUNICATION NETWORK
RÉSEAU DE COMMUNICATION SATELLITAIRE

(30) Priorität: 11.03.2011 DE 102011013717
(43) Veröffentlichungstag der Anmeldung: 15.01.2014
(73) Patentinhaber: Deutsches Zentrum für Luft- und Raumfahrt e.V., 51147 Köln (DE)
(72) Erfinder: BEHRENS, Jörg, 28355 Bremen (DE); WERNER, Klaus, 38179 Schwülper (DE); HAUER, Lars-Christian, 28355 Bremen (DE); DELOVSKI, Toni, 28217 Bremen (DE)
(74) Vertreter: Aisch, Sebastian
(86) Internationale Anmeldenummer: PCT/EP2012/054114
(87) Internationale Veröffentlichungsnummer: WO 2012/123360

(56) Entgegenhaltungen:
- WO-A1-2009/112112
- DE-A1-102005 031 439
- DE-A1-102008 026 415
- US-A1- 2004 092 257
- US-B1- 6 175 719

## Beschreibung

Die Erfindung betrifft ein Überwachungssystem zur Flugsicherung von Flugobjekten, die Sendeeinheiten zum Aussenden von Flugsicherungs-Funksignalen aufweisen, wobei die Flugsicherungs-Funksignale das jeweilige Flugzeug betreffende Flugdaten enthalten, mit einer Mehrzahl von Empfangseinheiten, die zum Empfang der ausgesendeten Flugsicherungs-Funksignale ausgebildet sind, wobei eine Mehrzahl von Satelliten vorgesehen sind, die jeweils über Kommunikationsmittel zum Bilden eines gemeinsamen Satelliten-Kommunikationsnetzwerkes verfügen und an denen jeweils mindestens eine der Empfangseinheiten angeordnet sind. Die Erfindung betrifft auch ein Verfahren sowie eine Verwendung eines derartigen Satelliten-Kommunikationsnetzwerkes hierzu.

### Stand der Technik

Die Überwachung und Kontrolle des weltweit stetig zunehmenden Luftverkehrs basiert heute überwiegend auf zwei grundlegenden Techniken: Radarüberwachung und sprachbasierte VHF-Funksysteme für das Air-Traffic-Management (ATM). Bei der Radarüberwachung werden mit Hilfe von speziellen Radar-Bodenstationen Funksignale ausgesendet, die dann entweder von dem Flugobjekt an seiner Außenoberfläche reflektiert und von der Bodenstation wieder empfangen werden (Primärradar) oder die das Flugobjekt veranlassen, selbstständig bestimmte Informationen an die Bodenstation zurückzusenden (Sekundärradar). In beiden Fällen ist es jedoch notwendig, dass sich das Flugobjekt innerhalb eines von der Reichweite der Radar-Bodenstation abhängigen Abdeckungsbereiches befindet, da ansonsten keine verwertbaren Signale entstehen. Da derartige Radar-Bodenstationen im Aufbau sehr teuer und somit meist auch nur in verkehrsreichen Regionen oder in Küstennähe zu finden sind, ist heutzutage eine lückenlose Radarüberwachung von Flugobjekten nicht gegeben.

Befindet sich ein Flugobjekt außerhalb der Radarabdeckung, so halten die entsprechenden Kontroll- und Leitstationen, welche für die Flugsicherung des entsprechenden Flugobjektes verantwortlich sind, in regelmäßigen Abständen Kontakt über das VHF-Funksystem. Das VHF-Funksystem basiert jedoch ausschließlich auf dem Prinzip von Sprachmeldungen, so dass es gerade bei Langstreckenflügen nicht selten vorkommt, dass die entsprechende Kontroll- und Leitstation über einen längeren Zeitraum keine Informationen von dem Flugzeug erhält, da beispielsweise der Autopilot eingeschaltet ist und die Piloten schlafen. Der Zustand des Flugobjektes ist somit über einen längeren Zeitraum ungewiss und eignet sich somit nicht für eine permanente, lückenlose Überwachung.

Zu dem bereits angesprochenen Primär- bzw. Sekundärradar sind sogenannte ADS-Systeme bekannt ("Automatic Dependent Surveillance" oder "automatische bordabhängige Überwachung"). Bei den ADS-Systemen werden an Bord des Flugzeuges automatisch und ständig entsprechende Flugdaten gesammelt, einschließlich der aktuellen Position, die beispielsweise mit Hilfe eines Satellitennavigationssystems ermittelt werden kann. Andere Flugdaten können beispielsweise die Flugnummer, der Flugzeugtyp, die Geschwindigkeit, die Flughöhe und die geplante Flugrichtung sein. Wird von dem Flugobjekt ein entsprechendes, von einer Bodenstation ausgesendetes Funksignal empfangen, so sendet das Flugobjekt diese Flugdaten mit Hilfe einer entsprechenden ADS-Nachricht an die Bodenstation aus. Die Bodenstation empfängt die Nachricht und kann die in der Nachricht enthaltenen Flugdaten den Fluglotsen oder Leitstellen anzeigen. Diese Systeme, welche die Nachrichten auf Anforderungen aussenden, werden häufig auch als ADS-C oder ADS-A bezeichnet. Hierfür sind die Flugzeuge mit so genannten FANS-1/A Geräten ausgerüstet, die eine Funk-Datenverbindung über VHF, HF oder Satellitenfunk ermöglichen und somit auch eine Überwachung der Flugzeuge im ozeanischen Luftraum. Allerdings werden die Positionsmeldungen aufgrund der niedrigen Datenrate in zeitlichen Abständen von ca. 15 Minuten oder mehr gesendet, so dass eine kontinuierliche Flugüberwachung nicht gegeben ist.

Neben den Systemen, die ausschließlich auf Anforderung ihre Flugdaten aussenden, existiert noch das sogenannte ADS-B (Broadcast) System, welches selbsttätig in periodischen, zeitdiskreten Abständen von ca. einer halben Sekunde eine entsprechende ADS-Nachricht aussendet. Befindet sich das Flugobjekt in einer verkehrsdichten Region, so befinden sich in der Regel hier eine ganze Reihe von Bodenstationen, welche die automatisch ausgesendete ADS-Nachricht empfangen können. Darüber hinaus ist es auch möglich, dass andere Flugobjekte, die über einen entsprechenden Empfänger verfügen, ADS-B Nachrichten von anderen Flugzeugen empfangen können, um so in Abhängigkeit von den in der Nachricht enthaltenen Flugdaten selbstständig ein Verkehrslagebild des umgebenden Luftraumes aufzubauen.

Da heutzutage die Ausrüstung von Verkehrsflugzeugen mit Mode-S-Transpondern verpflichtend vorgeschrieben ist, hat sich das Datenübertragungssystem Mode-S 1090ES als De-facto-Standard für das ADS-B System in der allgemeinen Luftfahrt durchgesetzt. Mode-S 1090ES basiert dabei auf die für Mode-S festgelegten Modulationsverfahren und Datenformaten, wobei jedem Flugzeug eine feste, weltweit einmalige 24bit-Adresse zugeordnet ist. Der Downlink im Mode-S erfolgt dabei mit einer Frequenz von 1090 MHz.

Die ADS-Systeme haben jedoch, wie alle funkortungsbasierten Systeme, den entscheidenden Nachteil, dass sich das Flugzeug im Empfangsbereich einer entsprechenden Empfangseinheit befinden muss, damit die von dem Flugzeug ausgesendeten ADS-Nachrichten auch von der entsprechenden übergeordneten Leitstelle empfangen werden können. Aufgrund der begrenzten Reichweite der ADS-B-Signale ist auch mit einem derartigen System eine weltweite, lückenlose Überwachung mit Hilfe von Bodenstationen nicht möglich, da zum einen aus Kostengründen und zum anderen aus geographischen Gegebenheiten nicht überall auf der Welt Bodenstationen zur lückenlosen Abdeckung errichtet werden können.

Um einen Empfang von ADS-Signalen auch in Gebieten zu gewährleisten, in denen keine Abdeckung durch entsprechende Bodenstationen gewährleistet ist, schlagen beispielsweise die DE 10 2008 026 415 A1 und DE 10 2008 013 357 A1 vor, dass die von einem Flugobjekt ausgesendeten ADS-B Signale von einem entsprechend dafür geeigneten Satelliten empfangen werden können. Von dort aus können die Nachrichten dann an eine Bodenstation weitergeleitet oder an einen Relais-Satelliten übertragen werden, um einen größeren Übertragungsweg zu erreichen. Durch die Tatsache, dass ein Satellit die von dem Flugzeug regelmäßig ausgesendeten ADS-B Signale abhört, kann gerade in Bereichen, wo keine Abdeckung mit Bodenstationen möglich ist, eine Teilüberwachung erfolgen.

Aus der US 6,175,719 B1 ist ein Payload-Design für einen Multi-Spot-Beam Satelliten bekannt, bei dem mithilfe von Richtantennen die Empfangs- und Sendeleistung zu Bodenstationen verbessert werden soll.

Nachteilig hierbei ist jedoch, dass die Verwendung von Relais-Satelliten zur Reichweitenverlängerung sehr kostenintensiv ist, da die Betreiber derartiger Relais-Satelliten für die Benutzung ein Entgelt erheben. Darüber hinaus muss eine Bodenstation mit einer Vielzahl von unterschiedlichen Satellitentypen kommunizieren können, um entsprechende ADS-Nachrichten praktisch auch empfangen zu können.

### Aufgabe

Im Hinblick hierauf ist es Aufgabe der vorliegenden Erfindung ein Verfahren und ein System anzugeben, mit dem eine weltweite, lückenlose Überwachung des Flugverkehrs möglich ist, das aber einfach und kosteneffektiv aufgebaut werden kann.

### Lösung

Die Aufgabe wird mit dem Überwachungssystem der eingangs genannten Art erfindungsgemäß mit den Merkmalen des Patentanspruchs 1 gelöst.

Die Flugsicherungs-Funksignale können die von den Mode-S-Transpondern an Bord der Flugzeuge ausgesendeten ADS-B Nachrichten sein.

Es wird somit erfindungsgemäß vorgeschlagen, dass Empfangseinheiten, welche die Flugsicherungs-Funksignale empfangen können, derart in die Struktur eines Satelliten-Kommunikationsnetzwerkes integriert werden, dass zur Übertragung der in den Funksignalen enthaltenen Flugdaten das gemeinsame Kommunikationsprotokoll des Satelliten-Kommunikationsnetzwerkes verwendet werden kann. Durch die Satellitenkonstellation wird ein weltweit umspannendes Satelliten-Kommunikationsnetzwerk gebildet, dessen Kommunikationsprotokoll für die Übertragung an die Bodenstation verwendet werden kann. Die Bodenstation selber kann dabei ebenfalls auf das standardisierte Kommunikationsprotokoll zur Kommunikation mit dem Satelliten-Kommunikationsnetzwerk zurückgreifen, so dass auch hier eine entsprechende Kommunikationsvorrichtung vereinfacht ausgebildet werden kann.

Durch die Verwendung des gemeinsamen Kommunikationsprotokolls des Satelliten-Kommunikationsnetzwerkes lässt sich eine von den Empfangseinheiten empfangene ADS-B Nachricht bzw. die darin enthaltenen Flugdaten von jedem beliebigen Ort an einen beliebigen anderen Ort der Welt übertragen. Da auf die Verwendung von Relais-Satelliten verzichtet werden kann, erfüllt dieses System somit auch die Echtzeitanforderungen von ATM-/ATC-Systemen. Die von den Flugzeugen ausgesendeten Flugdaten können somit in einem Bruchteil einer Sekunde an die entsprechenden Leitstationen übertragen werden. Bei den Flugzeugen selber bedarf es darüber hinaus jedoch keine weiteren Anpassungen, da Verkehrsflugzeuge heutzutage standardmäßig mit Mode-S-Transpondern ausgerüstet sind, die zum Aussenden von ADS-B Signalen als Flugsicherungs-Funksignale eingerichtet sind.

Um einen lückenlosen Empfangsbereich durch das Satelliten-Kommunikationsnetzwerk und den daran angeordneten Empfangseinheiten zu realisieren, ist es vorteilhaft, wenn die einzelnen Empfangsbereiche sich in ihren Randbereichen mit benachbarten Empfangsbereichen überlappen, so dass immer ein Empfang sichergestellt werden kann. Hierbei ist es nun ganz besonders vorteilhaft, wenn mehrfach empfangene Flugsicherungs-Funksignale und ihre darin enthaltenen Flugdaten nur einmal an die Bodenstation übertragen werden, um ein entsprechenden Traffic Overhead im Satelliten-Kommunikationsnetzwerk zu vermeiden. Mehrfach empfangene Flugsicherungs-Funksignale sind solche Funksignale, die innerhalb eines Überlappungsbereiches von einem Flugzeug einmal ausgesendet werden und von den jeweils benachbarten Empfangseinheiten empfangen werden.

Die Erkennung von mehrfach empfangenen Flugsicherungs-Funksignalen kann dabei beispielsweise in Abhängigkeit von der Adresse oder der Position des Flugzeuges sowie der bekannten Umlaufbahn und somit auch der Position der Satelliten erfolgen. Denkbar ist aber auch, dass nach Empfang eines Funksignales die Empfangseinheit entsprechende Empfangseinheiten auf benachbarten Satelliten abfragt, ob auch diese ein entsprechendes Funksignal empfangen haben. Über die Festlegung eines Masters und eines Slaves kann dann beispielsweise erreicht werden, dass nur der Master seine Daten an die Bodenstation sendet, während die Slaves ihre empfangenen Daten verwerfen.

Wie schon erwähnt, können die Flugsicherungs-Funksignale die von den Mode-S-Transpondern ausgesendeten ADS-B Nachrichten sein.

Weiterhin ist es ganz besonders vorteilhaft, wenn die Empfangseinheiten zum Zwischenspeichern von Teil-Flugdaten eingerichtet sind. Denn häufig werden Flugdaten, die sich nur sehr wenig oder sehr träge verändern, mit einer geringeren Update-Rate über das ADS-B System ausgesendet, als Flugdaten, die sich über die Zeit sehr stark verändern. So verändert sich beispielsweise die Geschwindigkeit, die Höhe und die Flugrichtung in einem 3- oder 5-Sekundenbereich nur sehr wenig, während die aktuelle Position aufgrund der Fluggeschwindigkeit sich innerhalb einer Sekunde stark verändert. Daher werden die weniger stark veränderlichen Flugdaten mit einer geringeren Update-Rate ausgesendet, die dann von den Empfangseinheiten zwischengespeichert werden können, während die stark veränderlichen Flugdaten mit einer sehr hohen Update-Rate ausgesendet und von den Empfangseinheiten empfangen werden. Die an die Bodenstation nunmehr übertragenen Flugdaten bestehen dann aus den aktuell empfangenen Flugdaten und den zwischengespeicherten Flugdaten, so dass immer ein vollständiger und kompletter Flugdaten-Report an die Bodenstation übertragen werden kann, wobei die Übertragung der Flugdaten mit der gleichen Update-Rate erfolgt, wie das Flugzeug die ADS-B Signale aussendet.

Vorteilhafterweise erhalten die Flugdaten nach dem Empfang durch die Empfangseinheit eine Zeitinformation, die auch Zeitstempel genannt wird, um somit den exakten Zeitpunkt des Empfangs durch die Empfangseinheit am Satelliten identifizieren zu können. Die Zeitinformation wird dabei entweder von dem Satelliten selber bereitgestellt oder durch die Empfangseinheit, wobei die Zeitinformation in Abhängigkeit eines Zeitsignals ermittelt wird, das sowohl mit dem Satelliten oder der Empfangseinheit als auch mit der entsprechenden Bodenstation synchronisiert ist. Ein solches synchronisiertes Zeitsignal kann beispielsweise ein Satellitennavigationssystem liefern.

Durch die ergänzte Zeitinformation kann die Bodenstation dann feststellen, wie lange der Übertragungsweg von dem Satelliten, der die eigentlichen ADS-B Signale empfangen hat, bis zur Bodenstation tatsächlich gedauert hat, um so die Aktualität der Flugdaten dem Fluglotsen mit anzeigen zu können. Des weiteren ist es denkbar, dass Flugdaten, deren Übertragungszeit einen gewissen Schwellwert überschritten haben, verworfen werden, da sie nicht mehr die aktuelle Fluglage darstellen und somit das Verkehrsbild negativ verzerren könnten.

Darüber hinaus ist es denkbar, dass die Bodenstation in Abhängigkeit der Zeitinformation und der daraus ermittelten Übertragungsdauer die zeitveränderlichen Flugdaten in Abhängigkeit von der Übertragungsdauer korrigiert. So ist es unter Kenntnis der Geschwindigkeit und der Übertragungsdauer möglich, die an Bord bestimmte Position des Flugzeuges unter Berücksichtigung der Übertragungszeit weiter zu tragen und somit zu korrigieren.

Erfindungsgemäß ist vorgesehen, dass die Empfangseinheiten zur Prädiktion von Positions- und/oder Bewegungsinformationen der Flugdaten in Abhängigkeit von einem zukünftigen Übertragungszeitpunkt eingerichtet sind. Nach Empfang der Flugsicherungs-Funksignale wird von der Empfangseinheit ermittelt, wann die in den Funksignalen enthaltenen Flugdaten an die Bodenstation unter Verwendung des Satelliten-Kommunikationsnetzwerkes übertragen werden sollen. In Abhängigkeit dieses zukünftigen Übertragungszeitpunktes werden nun die entsprechenden zeitabhängigen Flugdaten wie Positions- und/oder Bewegungsinformationen auf den Übertragungszeitpunkt gerechnet, so dass zum tatsächlichen Übertragungszeitpunkt die Flugdaten entsprechend der Prognose aktuell sind.

Da es sich bei den Mode-S-Signalen, die für das ADS-B System verwendet werden, um ein sogenanntes Puls-Position-Modulationsverfahren handelt, bei dem die Bit-Informationen anhand der Position innerhalb des Signalblocks festgelegt werden, und das Kanal-Zugriffsverfahren zufallsgesteuert ist, kommt es in verkehrsstarken Regionen häufig zu Signalkollisionen (Garbling), da viele Sender zufällig zeitgleich senden oder sich aufgrund unterschiedlicher Laufzeiten die Signale beim Empfänger gegenseitig überlagern können. Die Empfänger sind dann nicht mehr in der Lage, die verschiedenen Signale voneinander zu trennen und zu dekodieren, so dass sie insgesamt verworfen werden müssen.

Erfindungsgemäß haben die Empfangseinheiten eine Mehrzahl von Richt-Empfangsantennen mit zugehörigen Empfängern und Dekodern zur Bildung von sektorweisen Empfangsbereichen, um so innerhalb eines durch die Umlaufbahn des Satelliten bedingten Empfangsbereiches die Überwachung sektorweise durchzuführen. Dadurch wird die Wahrscheinlichkeit von Signalkollisionen aufgrund des nunmehr geringeren Empfangsbereiches pro Empfangsantenne verringert. Außerdem wird dadurch erreicht, dass, wenn der Satellit auf seiner Umlaufbahn in verkehrsreiche Regionen kommt, die Bereiche, die noch die verkehrsarmen Regionen abdecken, einen genügenden Empfang gewährleisten, während der Sektor, der sich bereits in dem verkehrsreichen Gebiet befindet, überlastet ist. Die Überlastung in verkehrsreichen Gebieten kann jedoch unkritisch sein, da hier gewöhnlich die Abdeckung durch Bodenradar oder ADS-B Bodenstationen hinreichend gewährleistet ist. Durch die sektorweise Anordnung wird somit zumindest erreicht, dass auch weiterhin in den verkehrsarmen Regionen ein sicherer Empfang gewährleistet bleibt.

Denkbar ist aber auch, dass die sektorweise Anordnung von Richt-Empfangsantennen derart überlappend erfolgt, dass auch bei verkehrsreichen Regionen aufgrund der unterschiedlichen Signallaufzeiten zumindest eine der Richt-Empfangsantennen ein entsprechendes Signal empfangen kann. Somit kann dann auch in verkehrsreichen Regionen eine Überwachung mittels des Satelliten-Kommunikationsnetzwerkes erfolgen.

Darüber hinaus ist es ganz besonders vorteilhaft, wenn die Empfangseinheiten mit Vorrichtungen zum Nachführen der Richt-Empfangsantenne und/oder zum Anpassen der Richtwirkung der Richt-Empfangsantennen in Abhängigkeit von einer Verkehrsdichte eingerichtet sind. Kommt beispielsweise der Satellit auf seiner Umlaufbahn in eine verkehrsreiche Region, so kann die Richt-Empfangsantenne des Sektors, die nunmehr in das verkehrsreiche Gebiet ragt, in ihrer Richtwirkung derart angepasst werden, dass beispielsweise der Sektor verkleinert wird. Um nun keine Lücken entstehen zu lassen, können die benachbarten Sektoren und deren Richt-Empfangsantennen derart angepasst werden, dass ihre Bereiche vergrößert werden, um somit einen lückenlosen Empfangsbereich zu gewährleisten. Durch die dynamische Anpassung der Richtwirkung der einzelnen Richt-Empfangsantennen kann somit das Problem der Signalkollision beim Puls-Position-Modulationsverfahren reduziert werden.

Denkbar ist aber auch, dass die einzelnen Richt-Empfangsantennen nachgeführt oder durch eine entsprechende Schwenkvorrichtung geschwenkt werden, um so die einzelnen Gebiete entsprechend abdecken zu können und Richt-Empfangsantennen aus verkehrsreichen Regionen herauszuhalten.

Die Ermittlung der Verkehrsdichte kann dabei beispielsweise in Abhängigkeit der Satellitenposition auf seiner Umlaufbahn ermittelt werden. So ist es allgemein bekannt, dass über den Ozeanen in der Regel eine geringere Verkehrsdichte vorliegt, während an bestimmten Flug-Knotenpunkten, wie internationale Flughäfen, mit einer sehr hohen Verkehrsdichte zu rechnen ist. Anhand der Position des Satelliten kann somit festgestellt werden, ob zumindest teilweise die Richt-Empfangsantennen mit ihren sektorweisen Empfangsbereichen in verkehrsreiche Regionen hineinragen.

Die Aufgabe wird darüber hinaus auch mit dem Verfahren zur weltweiten Flugsicherung von Flugobjekten gelöst mit den Merkmalen des Patentanspruchs 8.

Vorteilhafte Ausgestaltungen des Verfahrens finden sich in den entsprechenden Unteransprüchen.

Die Aufgabe wird darüber hinaus auch gelöst durch die Verwendung eines Satelliten-Kommunikationsnetzwerkes, das aus einer Mehrzahl von Satelliten mit jeweils mindestens einer Empfangseinheit zum Empfangen von Flugsicherungs-Funksignalen gebildet wird, um das vorstehende Verfahren durchzuführen.

Die vorliegende Erfindung wird anhand der beigefügten Zeichnungen beispielhaft näher erläutert. Es zeigen:
- Figur 1: - schematische Darstellung eines Überwachungssystems nach der vorliegenden Erfindung;
- Figur 2: - Darstellung eines Empfangsbereiches einer Empfangseinheit mit mehreren sektorweisen Richt-Empfangsantennen.

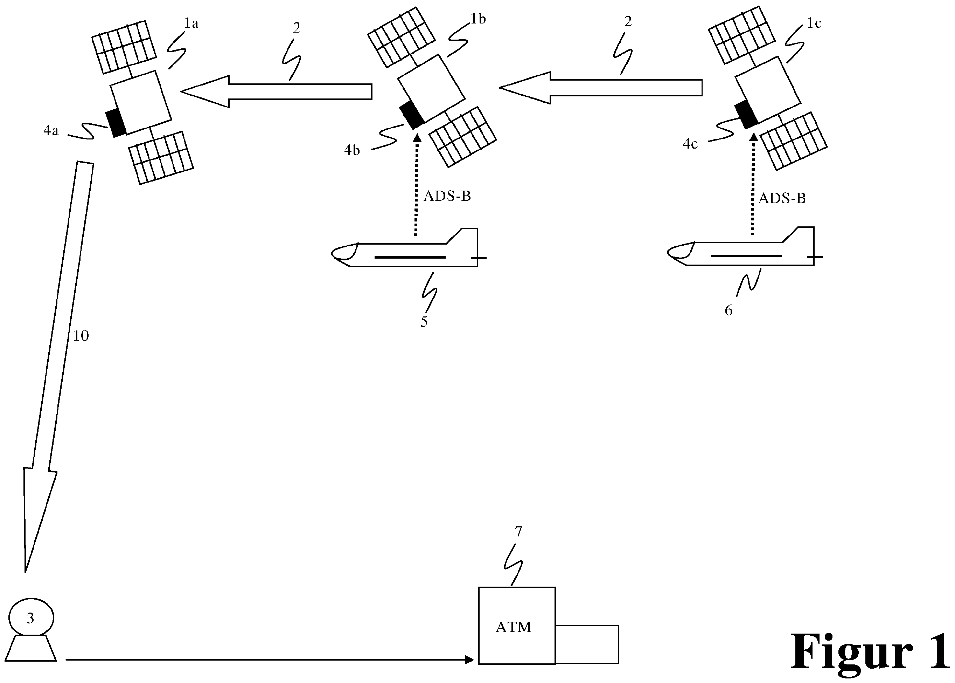

Figur 1 zeigt schematisch die Darstellung eines Überwachungssystems nach der vorliegenden Erfindung. Hierzu befinden sich mehrere Satelliten 1a bis 1c in einer relativ niedrigen Umlaufbahn, beispielsweise im LEO (Low Earth Orbit), bei dem die Flughöhe zwischen 200 km und 1.500 km beträgt. Die Satelliten weisen entsprechende Kommunikationsmittel auf, so dass sie untereinander über eine Kommunikationsverbindung 2 miteinander in Verbindung stehen und ein gemeinsames Satelliten-Kommunikationsnetzwerk bilden. Derartige Kommunikationsmittel können entsprechende Sender und Empfänger sein, die zum Aufbau von Inter-Satellite-Links eingerichtet sind.

Satelliten-Kommunikationsnetzwerke sind beispielsweise Iridium, Globalstar oder Orbcom. Bei Iridium handelt es sich um eine Satellitenkonstellation mit 66 LEO-Satelliten, mit denen ein weltweiter und lückenloser Telefonempfang unabhängig von etwaigen Bodenstationen gewährleistet werden soll. Das Satelliten-Kommunikationsnetzwerk ist dabei auf die Herstellung von Telefon- und/oder Datenverbindungen ausgelegt.

Durch das Bilden eines gemeinsamen Kommunikationsnetzwerkes können die Satelliten 1a bis 1c ihre Daten oder Nachrichten bis an eine zentrale Bodenstation 3 senden, die zur Kommunikation mit dem Satelliten 1a bis 1c eingerichtet ist. Zu Anschauungszwecken ist in diesem Ausführungsbeispiel die Anzahl der Satelliten auf drei beschränkt.

Diese Satellitenkonstellation 1a bis 1c, welche über die Kommunikationsverbindungen 2 ein gemeinsames Satelliten-Kommunikationsnetzwerk bildet, weist nun an jedem Satelliten 1a bis 1c eine entsprechende Empfangseinheit 4 auf, die eingerichtet ist, entsprechende Mode-S-Signale, die von entsprechenden Transpondern an den Flugzeugen 5 und 6 ausgesendet werden, empfangen zu können. So ermöglicht beispielsweise das Iridium-System, dass gegen Bezahlung an dem Satelliten spezielle Einheiten angeordnet werden können, die dann mit den Einrichtungen des Satelliten in Verbindung stehen und diese anwenden können. Die an den Satelliten 1a bis 1c angeordneten Empfangseinheiten 4a bis 4c sind somit derart in die Satelliten-Kommunikationsnetzwerkstruktur integriert, dass sie die für die Kommunikationsverbindungen 2 verwendeten Kommunikations- bzw. Netzwerkprotokolle zur Übertragung von Daten mit verwenden können, um so Daten bis an eine Bodenstation 3 der Satellitenkonstellation weiterleiten zu können.

Im Ausführungsbeispiel der Figur 1 befindet sich beispielsweise das Flugzeug 6 im Empfangsbereich der Empfangseinheit 4c des Satelliten 1c. Das Flugzeug 6 sendet dabei in regelmäßigen Abständen ADS-B Signale aus, die von der Empfangseinheit 4c des Satelliten 1c empfangen werden. Die in den ADS-B Funksignalen enthaltenen Flugdaten werden dann decodiert und über die Kommunikationsverbindung 2, welche das gemeinsame Kommunikationsnetzwerk der Satelliten bilden, an einem weiteren Satelliten 1b gesendet, der wiederum die Daten an den nächsten Satelliten über die Kommunikationsverbindung 2 sendet, woraufhin die Daten dann über einen Download-Link 10 zu der Bodenstation 3 des Kommunikationsnetzwerkes weitergeleitet werden. Von dort aus werden dann die von dem Flugzeug 6 ausgesendeten Flugdaten an ein Air-Traffic-Management oder Air-Traffic-Control Center 7 weitergeleitet, welche die Flugsicherung im Allgemeinen übernehmen.

Der Vorteil hierbei besteht darin, dass die einzelnen Bodenstationen 7 nicht mehr direkt mit den Satelliten kommunizieren müssen, sondern mit einer zentralen Bodenstation 3, welche mit dem Satelliten-Kommunikationsnetzwerk der Satelliten 1a bis 1c kommunizierend in Verbindung steht. Die gesamte, für die Kommunikation notwendige Infrastruktur wird dabei satellitenseitig zur Verfügung gestellt, so dass durch Hinzufügen von Empfangseinheiten in die Kommunikationsnetzwerkstruktur der Satelliten diese von den Empfangseinheiten mit benutzt werden kann. Somit lässt sich kostengünstig eine lückenlose Abdeckung mit ADS-B Flugüberwachung realisieren, ohne dass hierfür spezielle Satelliten gebaut und in die Umlaufbahn gebracht werden müssen, die lediglich dem Zweck dienen, ADS-B Signale zu empfangen.

Im Ausführungsbeispiel der Figur 1 befindet sich ein weiteres Flugzeug 5 im Empfangsbereich der Empfangseinheit 4b des Satelliten 1b. Auch diese, von der Empfangseinheit 4b empfangenen Flugdaten werden über eine Kommunikationsverbindung 2 der Satelliten untereinander an den Satelliten übertragen, der letztendlich den Downlink zur Basisstation des Satelliten-Kommunikationsnetzwerkes bildet. Die Bodenstation steht dabei mit einer Flugsicherheitszentrale 7 in Verbindung und leitet die Flugdaten an diese weiter.

Um eine möglichst hohe Update-Rate zu erreichen, beispielsweise derart, dass im Sekundenbereich Flugdaten an die Flugsicherheitszentrale 7 weitergeleitet werden, werden spezielle Flugdaten, die in wesentlich größeren Abständen von den Flugzeugen gesendet werden, in den Empfangseinheiten zwischengespeichert. Der gesamte Flugdaten-Report, der dann an die Flugsicherheitszentrale 7 weitergeleitet wird, ergibt sich dann aus den zwischengespeicherten Nachrichten sowie den aktuell empfangenen Daten, so dass eine hohe Update-Rate in Echtzeit realisiert werden kann.

Wird beispielsweise ein Satelliten-Kommunikationsnetzwerk verwendet, das für den Telefon- und Datenverkehr eingerichtet ist, beispielsweise bei dem Iridium-System, kann durch die Verwendung des auf Geschwindigkeit optimierten Kommunikationsnetzwerkes die Echtzeitfähigkeit dieses Systems realisiert werden, was eine wichtige Anforderung in der praktischen Realisierung darstellt. Somit kann gewährleistet werden, dass jeder Flugdaten-Report innerhalb eines fest vorgegebenen Zeitfensters an der Flugsicherheitszentrale 7 ankommt, so dass stets in Echtzeit aktuelle Daten vorliegen.

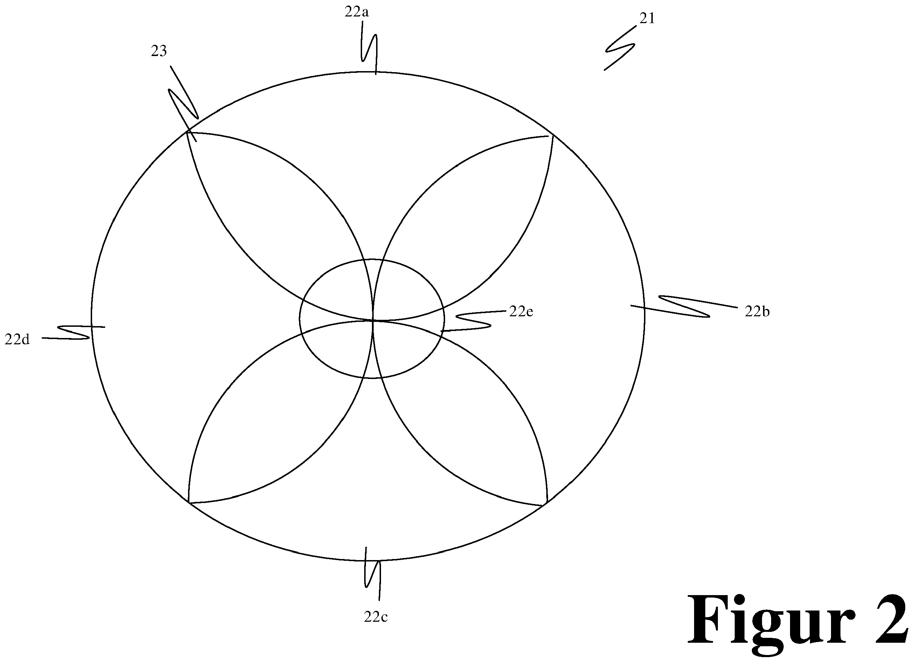

Figur 2 zeigt den Empfangsbereich 21 einer Empfangseinheit, die mehrere Richt-Empfangsantennen aufweist und somit den Empfangsbereich 21 sektorweise durch die Empfangssektoren 22a bis 22e abdeckt. In den Überlappungsbereichen 23 sind ADS-B Funksignale dabei von zwei oder mehreren Sektorantennen empfangbar.

Vorteilhafterweise ist die Empfangseinheit nun derart ausgebildet, dass sie die Ausdehnung der Sektor-Empfangsbereiche 22a bis 22e in Abhängigkeit einer Verkehrsdichte anpassen kann. Überfliegt der Satellit beispielsweise auf seiner Umlaufbahn ein verkehrsdichtes Gebiet, so tritt er in das verkehrsdichte Gebiet zuerst mit dem Randbereich eines Sektors ein. Im Beispiel der Figur 2 sei hier angenommen, dass der Empfangssektor 22a zuerst in das verkehrsdichte Gebiet eintritt.

Aufgrund des proprietären Modulationsverfahrens kommt es in verkehrsstarken Regionen zu Signalstörungen, da die Signale häufig zeitgleich ausgesendet werden und somit gestört werden. Ein sicherer Empfang ist dann nicht mehr möglich. Um das Problem nun einzuschränken, ist es ganz besonders vorteilhaft, wenn der Sektor-Empfangsbereich 22a verkleinert wird, während die benachbarten Sektor-Empfangsbereiche 22b bis 22d entsprechend proportional vergrößert werden. Durch die Verkleinerung des Sektor-Empfangsbereiches 22a wird erreicht, dass sich die Kollisionen nunmehr auf einen relativ kleinen Empfangsbereich beziehen, während in den anderen Empfangsbereichen aufgrund der geringen Verkehrsdichte weiterhin ein normaler Empfang möglich ist. In verkehrsdichten Gebieten ist dabei eine Signalstörung durchaus akzeptabel, da hier meist weitere Backup-Systeme existieren, wie beispielsweise Bodenradar oder Bodenstationen, die ebenfalls ADS-B Signale empfangen können.

Denkbar ist auch, dass die Richtwirkung verschoben wird, um beispielsweise zu erreichen, dass ein Sektor durch zwei oder mehrere Empfangsbereiche abgedeckt wird. So ist es im Ausführungsbeispiel der Figur 2 möglich, den Sektor-Empfangsbereich 22e in Richtung des Sektor-Empfangsbereiches 22a zu verschieben, um durch die Überlappung mehrerer Empfangsbereiche aufgrund der unterschiedlichen Signallaufzeiten einen halbwegs störungsfreien Betrieb sicherzustellen. Hierfür können die Empfangseinheiten beispielsweise mit Schwenkvorrichtungen ausgestattet werden, die es erlauben, die Richt-Empfangsantennen in die entsprechenden Richtungen einzuschwenken.

## Patentansprüche

1. Überwachungssystem zur Flugsicherung von Flugobjekten (5, 6), die Sendeeinheiten zum Aussenden von Flugsicherungs-Funksignalen (ADS-B) aufweisen, wobei die Flugsicherungs-Funksignale (ADS-B) das jeweilige Flugzeug (5, 6) betreffende Flugdaten enthalten, mit einer Mehrzahl von Empfangseinheiten (4a bis 4c), die zum Empfang der ausgesendeten Flugsicherungs-Funksignale ausgebildet sind, wobei eine Mehrzahl von Satelliten (1a bis 1c) vorgesehen sind, die jeweils über Kommunikationsmittel zum Bilden eines gemeinsamen Satelliten-Kommunikationsnetzwerkes verfügen und an denen jeweils mindestens eine der Empfangseinheiten (4a bis 4c) angeordnet sind, wobei die Empfangseinheiten (4a bis 4c) mit den Kommunikationsmitteln des jeweiligen Satelliten (1a bis 1c) verbunden und zum Übertragen der in den Flugsicherungs-Funksignalen enthaltenen Flugdaten an mindestens eine mit dem Satelliten-Kommunikationsnetzwerk kommunizierend in Verbindung stehenden Bodenstation (3, 7) unter Verwendung eines gemeinsamen Kommunikationsprotokolls des Satelliten-Kommunikationsnetzwerkes eingerichtet sind, wobei die Empfangseinheiten derart in die Struktur des Satelliten-Kommunikationsnetzwerkes integriert sind, dass zur Übertragung der in den Funksignalen enthaltenen Flugdaten das gemeinsame Kommunikationsprotokoll des Satelliten-Kommunikationsnetzwerkes verwendet werden kann, wobei die Empfangseinheiten (4a bis 4c) eine Mehrzahl von Richt-Empfangsantennen zur Bildung von sektorweisen Empfangsbereichen (22a bis 22e) haben, **dadurch gekennzeichnet, dass** die Empfangseinheiten (4a bis 4c) zur Prädiktion von Positions- und Bewegungsinformationen der Flugdaten in Abhängigkeit von einem zukünftigen Übertragungszeitpunkt, an dem die Empfangseinheit (4a bis 4c) die Flugdaten an die Bodenstation (3, 7) über das Satelliten-Kommunikationsnetzwerk überträgt, eingerichtet sind.

2. Überwachungssystem nach Anspruch 1, **dadurch gekennzeichnet, dass** das Überwachungssystem zum Erkennen von mehrfach empfangenen Flugsicherungs-Funksignalen, die von einer einzigen Sendeeinheit ausgesendet und von mehreren Empfangseinheiten in einem überlappenden Empfangsbereich (23) empfangen wurden, und bei Erkennung von mehrfach empfangenen Flugsicherungs-Funksignalen derart eingerichtet ist, dass die in den Flugsicherungs-Funksignalen enthaltenen Flugdaten nur einmal an die Bodenstation weitergeleitet werden.

3. Überwachungssystem nach Anspruch 1 oder 2, **dadurch gekennzeichnet, dass** die Empfangseinheiten (4a bis 4c) zum Zwischenspeichern von Teil-Flugdaten eingerichtet sind, wobei die an die Bodenstation (3, 7) übertragenen Flugdaten aus aktuell empfangenen Teil-Flugdaten und aus den zwischengespeicherten Teil-Flugdaten bestehen.

4. Überwachungssystem nach einem der vorhergehenden Ansprüche, **dadurch gekennzeichnet, dass** die Empfangseinheiten (4a bis 4c) zum Ergänzen der Flugdaten um eine Zeitinformation nach dem Empfangen der Flugsicherungs-Funksignale eingerichtet sind, wobei die Zeitinformation in Abhängigkeit von einem mit der Bodenstation (3, 7) und den Satelliten (1a bis 1c) synchronisierten Zeitsignals ermittelt wird.

5. Überwachungssystem nach einem der vorhergehenden Ansprüche, **dadurch gekennzeichnet, dass** die Empfangseinheiten (4a bis 4c) eine Mehrzahl von Richt-Empfangsantennen mit überlappenden Empfangsbereichen (23) benachbarter Richt-Empfangsantennen haben.

6. Überwachungssystem nach einem der vorhergehenden Ansprüche, **dadurch gekennzeichnet, dass** die Empfangseinheiten (4a bis 4c) zum Nachführen der Richt-Empfangsantennen und/oder zum Anpassen der Richtwirkung der Richt-Empfangsantennen in Abhängigkeit von einer, insbesondere im Empfangsbereich (21) liegenden Verkehrsdichte eingerichtet sind.

7. Verfahren zur weltweiten Flugsicherung von Flugobjekten, mit den Schritten:
a. Aussenden von Flugsicherungs-Funksignalen mittels von an den Flugobjekten angeordneten Sendeeinheiten, wobei die Flugsicherungs-Funksignale das jeweilige Flugzeug betreffende Flugdaten enthalten,
b. Empfangen der ausgesendeten Flugsicherungs-Funksignale durch an Satelliten angeordneten Empfangseinheiten, wobei die Satelliten über Kommunikationsmittel zum Bilden eines gemeinsamen Satelliten-Kommunikationsnetzwerkes verfügen und die Empfangseinheiten mit den Kommunikationsmitteln des jeweiligen Satelliten verbunden sind,
c. Übertragen der in den Flugsicherungs-Funksignalen enthaltenen Flugdaten an mindestens eine mit dem Satelliten-Kommunikationsnetzwerk kommunizierend in Verbindung stehenden Bodenstation unter Verwendung eines gemeinsamen Kommunikationsprotokolls des Satelliten-Kommunikationsnetzwerkes, wobei die Empfangseinheiten derart in die Struktur des Satelliten-Kommunikationsnetwerkes integriert werden, dass zur Übertragung der in den Funksignalen enthaltenen Flugdaten das gemeinsame Kommunikationsprotokoll des Satelliten-Kommunikationsnetzwerkes verwendet werden kann,
d. mit einer Mehrzahl von Richt-Empfangsantennen pro Empfangseinheit zur Bildung von sektorweisen Empfangsbereichen, insbesondere mit überlappenden Empfangsbereichen benachbarter Richt-Empfangsantennen, und Nachführen der Richt-Empfangsantennen und/oder Anpassen der Richtwirkung der Richt-Empfangsantennen in Abhängigkeit von einer, insbesondere mindestens einen Empfangsbereich der Richt-Empfangsantenne betreffenden Verkehrsdichte, und
e. Prädiktion von Positions- und/oder Bewegungsinformationen der Flugdaten in Abhängigkeit von einem zukünftigen Übertragungszeitpunkt, an dem die Empfangseinheit die Flugdaten an die Bodenstation über das Satelliten-Kommunikationsnetzwerk überträgt.

8. Verfahren nach Anspruch 7, **gekennzeichnet durch** Erkennen von mehrfach empfangenen Flugsicherungs-Funksignalen, die von einer einzigen Sendeeinheit ausgesendet und von mehreren Empfangseinheiten in einem überlappenden Empfangsbereich empfangen wurden, und Übertragen der in den Flugsicherungs-Funksignalen enthaltenen Flugdaten an die Bodenstation derart, dass die Flugdaten nur einmal an die Bodenstation weitergeleitet werden.

9. Verfahren nach Anspruch 7 oder 8, **gekennzeichnet durch** Zwischenspeicherung von Teil-Flugdaten durch eine der Empfangseinheiten und Bilden der an die Bodenstation zu übertragenen Flugdaten aus den zwischengespeicherten Teil-Flugdaten und aktuell empfangenen Teil-Flugdaten.

10. Verfahren nach einem der Ansprüche 7 bis 9, **gekennzeichnet durch** Ergänzen der Flugdaten um eine Zeitinformation nach dem Empfangen der Flugsicherungs-Funksignale durch die Empfangseinheit, wobei die Zeitinformation in Abhängigkeit von einem mit der Bodenstation und den Satelliten synchronisierten Zeitsignal ermittelt wird.

11. Verfahren nach einem der Ansprüche 7 bis 10, **gekennzeichnet durch** Empfangsbereiche mit überlappenden Empfangsbereichen benachbarter Richt-Empfangsantennen.

12. Verfahren nach einem der Ansprüche 7 bis 11, **gekennzeichnet durch** Ermitteln einer prognostizierten Verkehrsdichte in Abhängigkeit von der aktuellen Position des Satelliten, an dem die Empfangseinheit und die Richt-Empfangsantennen angeordnet sind.

13. Verwendung eines Satelliten-Kommunikationsnetzwerkes, das aus einer Mehrzahl von Satelliten mit jeweils mindestens einer Empfangseinheit zum Empfang von Flugsicherungs-Funksignalen gebildet wird, um das Verfahren nach einem der Ansprüche 7 bis 12 durchzuführen.

## Claims

1. A monitoring system for the air-traffic control of flying objects (5, 6) which have transmitting units for transmitting air-traffic control radio signals (ADS-B), wherein the air-traffic control radio signals (ADS-B) contain flight data relating to the respective aircraft (5, 6), with a plurality of receiving units (4a to 4c) which are designed to receive the transmitted air-traffic control radio signals, wherein a plurality of satellites (1a to 1c) are provided which in each case have communication means for forming a common satellite communication network and on each of which at least one of the receiving units (4a to 4c) is in each case arranged, whereby the receiving units (4a to 4c) are connected to the communication means of the respective satellite (1a to 1c) and are configured to transmit the flight data contained in the air-traffic control radio signals to at least one ground station (3, 7) having a communication link to the satellite communication network using a common communication protocol of the satellite communication network, whereby the receiving units are integrated into the structure of a satellite communication network in such a way that the common communication protocol of the satellite communication network can be used to transmit the flight data contained in the radio signals, whereby the receiving units (4a to 4c) have a plurality of directional receive antennas to form sector-by-sector receiving areas (22a to 22e), **characterized in that** the receiving units (4a to 4c) are configured to predict position and movement information of the flight data depending on a future transmission time at which the receiving unit (4a to 4c) transmits the flight data to the ground station (3, 7) via the satellite communication network.

2. The monitoring system as claimed in claim 1, **characterized in that** the monitoring system is configured to identify air-traffic control radio signals received multiple times transmitted by a single transmitting unit and received by a plurality of receiving units in an overlapping receiving area (23) and, on identifying air-traffic control radio signals received multiple times, is configured in such a way that the flight data contained in the air-traffic control radio signals are forwarded once only to the ground station.

3. The monitoring system as claimed in claim 1 or 2, **characterized in that** the receiving units (4a to 4c) are configured for the temporary storage of partial flight data, wherein the flight data transmitted to the ground station (3, 7) consist of currently received partial flight data and the temporarily stored partial flight data.

4. The monitoring system as claimed in one of the preceding claims, **characterized in that** the receiving units (4a to 4c) are configured to supplement the flight data with time information following the reception of the air-traffic control radio signals, wherein the time information is determined depending on a time signal synchronized with the ground station (3, 7) and the satellites (1a to 1c).

5. The monitoring system as claimed in one of the preceding claims, **characterized in that** the receiving units (4a to 4c) have a plurality of directional receive antennas with overlapping receiving areas (23) of adjacent directional receive antennas.

6. The monitoring system as claimed in one of the preceding claims, **characterized in that** the receiving units (4a to 4c) are configured to track the directional receive antennas and/or to adapt the directional effect of the directional receive antennas depending on a traffic density located, in particular, in the receiving area (21).

7. A method for worldwide air-traffic control of flying objects, with the following steps:
a) transmission of air-traffic control radio signals by means of transmitting units arranged on the flying objects, wherein the air-traffic control radio signals contain flight data relating to the respective aircraft,
b) reception of the transmitted air-traffic control signals by receiving units arranged on satellites, wherein the satellites have communication means to form a common satellite communication network and the receiving units are connected to the communication means of the respective satellite,
c) transmission of the flight data contained in the air-traffic control radio signals to at least one ground station having a communication link to the satellite communication network using a common communication protocol of the satellite communication network, whereby the receiving units are integrated into the structure of a satellite communication network in such a way that the common communication protocol of the satellite communication network can be used to transmit the flight data contained in the radio signals,
d) with a plurality of directional receive antennas per receiving unit to form the sector-by-sector receiving areas, in particular with overlapping receiving areas of adjacent directional receive antennas, and tracking of the directional receive antennas and/or adaptation of the directional effect of the directional receive antennas depending on a traffic density relating, in particular, to at least one receiving area of the directional receive antenna, and
e) prediction of the position and/or movement information of the flight data depending on a future transmission time at which the receiving unit transmits the flight data to the ground station via the satellite communication network.

8. The method as claimed in the 7, **characterized by** identification of air-traffic control radio signals received multiple times transmitted by a single transmitting unit and received by a plurality of receiving units in an overlapping receiving area, and transmission of the flight data contained in the air-traffic control radio signals to the ground station in such a way that the flight data are forwarded once only to the ground station.

9. The method as claimed in claim 7 or 8, **characterized by** temporary storage of partial flight data by one of the receiving units and formation of the flight data to be transmitted to the ground station from the temporarily stored partial flight data and currently received partial flight data.

10. The method as claimed in one of claims 7 to 9, **characterized by** supplementing of the flight data with time information following the reception of the air-traffic control radio signals by the receiving unit, wherein the time information is determined depending on a time signal synchronized with the ground station and the satellites.

11. The method as claimed in one of claims 7 to 10, **characterized by** overlapping receiving areas of adjacent directional receive antennas.

12. The method as claimed in one of claims 7 to 11, **characterized by** determination of a forecast traffic density depending on the current position of the satellite on which the receiving unit and the directional receive antennas are arranged.

13. A use of a satellite communication network formed from a plurality of satellites in each case with at least one receiving unit for receiving air-traffic control radio signals in order to carry out the method as claimed in one of claims 7 to 12.

## Revendications

1. Système de surveillance pour le contrôle de la navigation aérienne d'objets volants (5, 6) qui présentent des unités d'émission pour l'émission de signaux radio de contrôle de navigation aérienne (ADS-B), dans lequel les signaux radio de contrôle de navigation aérienne (ADS-B) contiennent des données de vol concernant l'avion (5, 6) respectif, avec une pluralité d'unités de réception (4a à 4c) réalisées pour la réception des signaux radio de contrôle de navigation aérienne émis, dans lequel une pluralité de satellites (1a à 1c) sont prévus, lesquels disposent respectivement de moyens de communication pour la formation d'un réseau de communication satellitaire commun et sur lesquels respectivement au moins une des unités de réception (4a à 4c) est disposée, dans lequel les unités de réception (4a à 4c) sont connectées aux moyens de communication du satellite (1a à 1c) respectif et sont étudiées pour la transmission des données de vol contenues dans les signaux radio de contrôle de navigation aérienne à au moins une station terrestre (3, 7) en liaison de communication avec le réseau de communication satellitaire en utilisant un protocole de communication commun du réseau de communication satellitaire, dans lequel les unités de réception sont intégrées dans la structure du réseau de communication satellitaire de manière à ce que, pour la transmission des données de vol contenues dans les signaux radio, le protocole de communication commun du réseau de communication satellitaire peut être utilisé, dans lequel les unités de réception (4a à 4c) ont une pluralité d'antennes directives de réception pour la formation de zones de réception sectorielles (22a à 22e), **caractérisé en ce que** les unités de réception (4a à 4c) sont étudiées pour la prédiction d'informations de position et de mouvement des données de vol en fonction d'un moment de transmission futur où l'unité de réception (4a à 4c) transmet les données de vol à la station terrestre (3, 7) via le réseau de communication satellitaire.

2. Système de surveillance selon la revendication 1, **caractérisé en ce que** le système de surveillance est étudié pour la reconnaissance de signaux radio de contrôle de navigation aérienne réceptionnés plusieurs fois, lesquels ont été émis par une seule unité d'émission et ont été réceptionnés par plusieurs unités de réception dans une zone de réception de chevauchement (23) et, en cas de reconnaissance de signaux radio de contrôle de navigation aérienne réceptionnés plusieurs fois, est étudié de manière à ce que les données de vol contenues dans les signaux radio de contrôle de navigation aérienne soient retransmises seulement une fois à la station terrestre.

3. Système de surveillance selon la revendication 1 ou 2, **caractérisé en ce que** les unités de réception (4a à 4c) sont étudiées pour le stockage intermédiaire de données de vol partielles, dans lequel les données de vol transmises à la station terrestre (3, 7) se composent de données de vol partielles actuellement réceptionnées et des données de vol partielles stockées de façon intermédiaire.

4. Système de surveillance selon l'une des revendications précédentes, **caractérisé en ce que** les unités de réception (4a à 4c) sont étudiées pour compléter les données de vol avec une information de temps après la réception des signaux radio de contrôle de navigation aérienne, dans lequel l'information de temps est déterminée en fonction d'un signal de temps synchronisé avec la station terrestre (3, 7) et les satellites (1a à 1c).

5. Système de surveillance selon l'une des revendications précédentes, **caractérisé en ce que** les unités de réception (4a à 4c) ont une pluralité d'antennes directives de réception avec des zones de réception de chevauchement (23) d'antennes directives de réception voisines.

6. Système de surveillance selon l'une des revendications précédentes, **caractérisé en ce que** les unités de réception (4a à 4c) sont étudiées pour l'asservissement des antennes directives de réception et/ou pour l'adaptation de la directivité des antennes directives de réception en fonction d'une densité de trafic située en particulier dans la zone de réception (21).

7. Procédé pour le contrôle mondial de la navigation aérienne d'objets volants, avec les étapes suivantes :
a. l'émission de signaux radio de contrôle de navigation aérienne au moyen d'unités d'émission disposées sur les objets volants, les signaux radio de contrôle de navigation aérienne contenant des données de vol concernant l'avion respectif,
b. la réception des signaux radio de contrôle de navigation aérienne émis par des unités de réception disposées sur des satellites, les satellites disposant de moyens de communication pour la formation d'un réseau de communication satellitaire commun et les unités de réception sont connectées aux moyens de communication du satellite respectif,
c. la transmission des données de vol contenues dans les signaux radio de contrôle de navigation aérienne à au moins une station terrestre en liaison de communication avec le réseau de communication satellitaire en utilisant un protocole de communication commun du réseau de communication satellitaire, les unités de réception étant intégrées dans la structure du réseau de communication satellitaire de manière à ce que, pour la transmission des données de vol contenues dans les signaux radio, le protocole de communication commun du réseau de communication satellitaire peut être utilisé,
d. avec une pluralité d'antennes directives de réception par unité de réception pour la formation de zones de réception sectorielles, en particulier avec des zones de réception de chevauchement d'antennes directives de réception voisines, et l'asservissement des antennes directives de réception et/ou l'adaptation de la directivité des antennes directives de réception en fonction d'une densité de trafic concernant en particulier au moins une zone de réception de l'antenne directive de réception, et
e. la prédiction d'informations de position et/ou de mouvement des données de vol en fonction d'un moment de transmission futur où l'unité d'émission transmet les données de vol à la station terrestre via le réseau de communication satellitaire.

8. Procédé selon la revendication 7, **caractérisé par** la reconnaissance de signaux radio de contrôle de navigation aérienne réceptionnés plusieurs fois, lesquels ont été émis par une seule unité d'émission et ont été réceptionnés par plusieurs unités de réception dans une zone de réception de chevauchement, et la transmission des données de vol contenues dans les signaux radio de contrôle de navigation aérienne à la station terrestre de manière à ce que les données de vol soient retransmises seulement une fois à la station terrestre.

9. Procédé selon la revendication 7 ou 8, **caractérisé par** le stockage intermédiaire de données de vol partielles par l'une des unités de réception et la formation des données de vol à transmettre à la station terrestre à partir des données de vol partielles stockées de façon intermédiaire et de données de vol partielles actuellement reçues.

10. Procédé selon l'une des revendications 7 à 9, **caractérisé en ce que** les données de vol sont complétées par une information de temps après la réception des signaux radio de contrôle de navigation aérienne par l'unité de réception, dans lequel l'information de temps est déterminée en fonction d'un signal de temps synchronisé avec la station terrestre et les satellites.

11. Procédé selon l'une des revendications 7 à 10, **caractérisé par** des zones de réception avec des zones de réception de chevauchement d'antennes directives de réception voisines.

12. Procédé selon l'une des revendications 7 à 11, **caractérisé par** la détermination d'une densité de trafic pronostiquée en fonction de la position actuelle du satellite sur lequel l'unité de réception et les antennes directives de réception sont disposées.

13. Utilisation d'un réseau de communication satellitaire, lequel est formé par une pluralité de satellites avec respectivement au moins une unité de réception pour la réception de signaux radio de contrôle de navigation aérienne, pour la mise en oeuvre du procédé selon l'une des revendications 7 à 12.
